# FASCICULE DE BREVET EUROPEEN

(11) **EP 1 118 269 B1**
(45) Date de publication et mention de la délivrance du brevet: **03.09.2003**
(21) Numéro de dépôt: 00200182.4
(22) Date de dépôt: 18.01.2000
(51) Int. Cl.: A21C 15/02, A21C 9/04, A23G 3/20, A23G 9/24, A23G 9/28

(54) **"Méthode de fabrication de barres de confiserie"**
Verfahren zur Herstellung von Konfektriegeln
Process for the production of a confectionery bar

(43) Date de publication de la demande: 25.07.2001
(73) Titulaire: SOCIETE DES PRODUITS NESTLE S.A., 1800 Vevey (CH)
(72) Inventeur: Lefebvre, René, 21560 Arc sur Tille (FR)
(74) Mandataire: Borne, Patrice Daniel

(56) Documents cités:
- EP-A- 0 304 570
- DE-A- 3 532 071
- US-A- 4 159 348
- US-A- 4 454 834
- US-A- 4 473 344
- US-A- 4 518 617
- US-A- 4 797 291
- US-A- 5 870 947

## Description

L'invention se rapporte au domaine de la fabrication des barres de confiserie. L'invention concerne en particulier les barres comprenant un coeur de confiserie solide en trois dimensions et un enrobage au moins partiel de sucre cuit.

Les barres à base de sucre cuit comprenant un coeur du type gaufre, biscuit ou glace, par exemple, sont des produits de confiserie ayant un succès grandissant. Le sucre cuit apporte une masticabilité du produit qui est fortement appréciée du fait qu'il se marie bien en bouche avec le reste du produit. Un coeur recouvert sur plusieurs faces par le sucre cuit apporte une meilleure homogénéité en bouche qu'une structure en couches superposées telle qu'un simple laminé du type caramel/gaufre, par exemple.

On recherche donc à fabriquer des barres qui sont des produits composites formés généralement d'un coeur solide en trois dimensions enrobé tout au moins en partie dans ses trois dimensions d'une couche de sucre cuit, elle-même enrobée, de préférence, d'une couche externe de chocolat.

La méthode de fabrication traditionnelle de telles barres de confiserie consiste à faire défiler de manière continue des tronçons séparés du coeur à enrober sous un rideau de sucre cuit liquide afin d'obtenir l'enrobage du coeur sur plusieurs de ses faces. La température nécessaire pour atteindre un degré de fluidité suffisant est de l'ordre de 60°C et plus, pour un sucre cuit du type caramel, par exemple. Un inconvénient majeur de l'enrobage sous rideau provient de la difficulté à contrôler l'épaisseur de l'enrobage des flancs du coeur. En particulier, en raison de sa fluidité importante au moment du passage du coeur, le sucre cuit ne durcit pas immédiatement et a donc tendance à couler le long des flancs du coeur en formant ainsi un gradient d'épaisseur d'enrobage indésirable. Il en résulte des problèmes de qualité et de reproductibilité du produit. Un autre inconvénient est lié à la masse importante de liquide qui est nécessaire pour réaliser un enrobage correct avec une proportion à récupérer relativement important. If faut ainsi prévoir un système de récupération et de retraitement de la masse en sucre en tenant compte du problème que cette masse a tendance à durcir rapidement au contact des éléments de l'installation de récupération. Dans certains cas, il est nécessaire de prévoir un système de refroidissement sous tunnel pour accélérer le refroidissement de l'enrobage, réduire l'effet de gradient et ainsi limiter la "perte" en matière d'enrobage.

Il existe donc un besoin pour une méthode de fabrication de barres de confiserie qui résout les inconvénients précités et en particulier élimine le problème lié à la formation d'un gradient d'épaisseur lors de l'enrobage d'un produit en trois dimensions.

La présente invention se rapporte donc à la fabrication de barres individuelles de confiserie comprenant un coeur en trois dimensions et une couche en matériau de confiserie à base de sucre cuit recouvrant en partie au moins le coeur. La méthode comprend une opération au cours de laquelle au moins une bande continue en matériau de confiserie à base de sucre cuit est calibrée à chaud sur un rouleau de refroidissement. Puis, après refroidissement suffisant sur ledit rouleau, la bande est décollée du rouleau. La bande est alors déposée sur une base du coeur défilant de manière continue sur un moyen de convoyage. La dépose se fait par mise en contact de la bande sensiblement selon un plan de dépose adjacent à la surface ou ligne de contact la plus élevée de la base. Selon un aspect important de l'invention, la bande est amenée au moment de la dépose dans un état viscoplastique qui lui permet de se déformer sous son propre poids de façon à recouvrir en partie au moins les faces de ladite base située en dessous de ladite surface/ligne de contact. On procède ensuite au découpage en tronçons de longueur voulue.

Une telle méthode a pour avantage de permettre un enrobage ou recouvrement d'une base de coeur au moyen d'un matériau de confiserie sans rencontrer les inconvénients liés aux procédés traditionnels d'enrobage sous rideau. En particulier, la dépose se fait en réduisant, voire en éliminant totalement, le gradient d'épaisseur d'enrobage sur les côtés du coeur et engendre un minimum de perte de matière. Il en résulte une meilleure maîtrise des tolérances dimensionnelles du produit. Non seulement la qualité et la reproductibilité du produit sont assurées, mais il est aussi plus facile de prévoir des modifications dans la conception, la structure et les caractéristiques du produit selon les besoins, comme par exemple, pour adapter le produit à différents goûts ou différents marchés.

De préférence, la déformation de la bande se fait par pliage des parties libres sur la base du coeur et sans modifications significatives des dimensions initiales de la bande telles que définies lors de l'application de la bande sur ledit rouleau. Par "parties libres" il faut entendre les parties de la bande n'étant pas en contact avec la surface ou avec la ligne de contact de la base au moment de la dépose sur la base. Il est ainsi surprenant de constater qu'il est possible de réaliser la dépose de la bande pour l'enrobage au moins partiel du coeur en utilisant les propriétés de déformation viscoplastique du matériau de confiserie; en lui permettant de plier simplement sous son propre poids sans toutefois affecter l'épaisseur ou la largeur de la bande initialement prévue. Une modification dimensionnelle non-significative s'entend d'une extension inférieure à 5% par rapport aux dimensions initiales telles que définies au moment du calibrage de la bande.

Selon un aspect préféré de l'invention, l'application de la bande en matériau de confiserie se fait par application à chaud du matériau sur le rouleau. La température initiale atteinte par le matériau de confiserie est la température efficace pour permettre le calibrage de la bande en épaisseur et en largeur au travers d'une ouverture ayant les dimensions correspondantes aux dimensions de la bande à déposer.

Le calibrage de la bande est une étape importante au cours de laquelle la bande est formée aux dimensions qui correspondent au développé de la couche de confiserie une fois en configuration pliée ou enrobée sur la base du coeur.

De façon à contrôler les caractéristiques physiques de la bande, en particulier son état viscoplastique au moment de la dépose sur la base du coeur, il s'avère nécessaire de refroidir la bande pour la solidifier suffisamment jusqu'à son décollement du rouleau. Pour cela, le rouleau est utilisé pour refroidir la bande en matériau de sucre cuit depuis l'application de la bande sur le rouleau jusqu'à son décollement. Selon une caractéristique de l'invention, on fait subir à la bande une baisse de températures sur le rouleau de refroidissement comprise entre 50 et 60°C, de préférence entre 52 et 57°C. Cette baisse de température correspond à la différence entre la température initiale de la bande de sucre cuit lors du calibrage et la température finale ou de dépose de la bande sur la base. Il est important de noter que la bande n'est soumise à aucune sollicitation mécanique lors de sa descente contrôlée en température sur le rouleau ; ce qui permet de préserver intacte la structure émulsive du réseau sucre/matière grasse. On conserve ainsi donc de bonnes caractéristiques de la matière avec pour avantage, en particulier, de retarder les phénomènes de transfert d'humidité en direction du coeur.

La température initiale t₁ nécessaire du sucre cuit pour permettre son passage efficace au travers de l'ouverture en assurant un calibrage précis de la bande sur le rouleau est comprise entre 75 et 95°C, de préférence entre 85 et 92°C.

La température initiale est choisie de sorte que la masse en sucre cuit soit dans un état de viscosité faible permettant son calibrage au travers de l'ouverture. Si la masse est trop visqueuse en raison d'une température trop basse, la bande ne se calibre pas sur le rouleau ou tout au moins pas aux dimensions voulues et l'ouverture risque d'être partiellement ou totalement obstruée par le matériau. Une température initiale excessive peut aussi entraîner une coulée de la bande qui s'affaisse sur la surface du rouleau.

La température finale t₂ de la bande lors de sa dépose est, quant à elle, comprise entre 25 et 40°C, de préférence 32 et 37°C. La température finale du matériau est aussi importante car elle détermine l'état plastique du matériau. Si la bande est trop chaude, elle ne se décolle pas facilement, ce qui peut conduire à un arrachement ou à une extension de celle-ci, Au contraire une bande dans un état de durcissement excessif va pouvoir se décoller facilement mais ne se pliera pas après dépose sur la base du coeur et l'enrobage ne se fera pas correctement.

Bien entendu, les valeurs de températures peuvent varier quelque peu en fonction du type du sucre cuit utilisé et de sa formulation selon par exemple qu'il s'agit de caramel, de marsmallow, de nougat ou autres. Il faut aussi noter que la bande n'a pas une température uniforme sur toute sa section transversale. On constate un gradient de température de plusieurs degrés entre la surface de la bande en contact sur le rouleau et la surface de la bande externe. Un certain rééquilibrage en température à l'intérieur de la bande s'établit toutefois lorsque la bande quitte la surface du rouleau. Les températures données s'entendent toutefois des températures moyennes pour une section donnée dans la bande.

On a pu déterminer par des mesures de viscosités appropriées que la viscosité plastique du matériau à base de sucre cuit dans la plage de flexibilité au pliage considérée est comprise de préférence entre 4000 et 10.000 poises pour un taux de cisaillement compris entre 2 et 8 second⁻¹; et préférablement comprise entre 4500 et 7600 poises. Le sucre cuit étant un produit visqueux à comportement non-Newtonien, sa viscosité est dépendante du seuil de cisaillement considéré.

Le contrôle précis des températures de la bande est obtenu essentiellement en ajustant précisément la température du rouleau de refroidissement et la vitesse d'avance du rouleau. Ainsi, le rouleau est généralement maintenu à une température constante de l'ordre de 18 à 22°C, de préférence 20°C+/-1°C pour une vitesse d'avance de l'ordre de 4-7 m/min, de préférence 5-6 m/min Le rouleau est refroidit par circulation interne de fluide réfrigérant tel que de l'eau ou un mélange d'eau et de glycol. Les dimensions du rouleau peuvent être variables. Toutefois, le diamètre du rouleau est de préférence compris entre 90 cm à 1,5 m, de préférence d'environ 1 mètre.

Dans un premier mode possible, le rouleau est entraîné en rotation opposé au un sens correspondant au sens de défilement de la base du coeur de façon à ce qu'après son décollement, la bande forme une boucle ouverte vers l'avant ; la surface de contact de la bande avec le rouleau étant alors la surface de contact sur la base du coeur. Ce mode particulier a pour avantage de permettre la dépose sur la surface externe de pièces d'inclusions telles que des céréales, noix, fruits secs, pépites de chocolat, bonbons ou autres. La dépose a lieu de préférence après application de la bande sur le rouleau et avant décollement de celle-ci du rouleau. On profite ainsi de l'état relativement pâteux de la bande pour obtenir l'adhérence d'inclusions solides qui lors du contact avec la bande sont retenues par celle-ci. Au fur et à mesure de la descente sur le rouleau, l'adhérence des inclusions est sécurisée par le durcissement progressif de la bande. La déposition d'éléments sur le rouleau est un aspect en tant que tel intéressant de l'invention par rapport aux procédés traditionnels sous rideau dans la mesure où il permet d'obtenir une plus grande régularité de la dépose sur toutes les faces du produit. En effet, dans la technique sous rideau, la dépose d'inclusions se fait après enrobage du coeur par le sucre cuit et donc les flancs de l'enrobage fournissent une moins bonne prise d'adhérence par rapport à la surface supérieure de l'enrobage. Il résulte du procédé traditionnel donc une irrégularité dans la densité en inclusions entre le dessus et les côtés de l'enrobage. Au contraire, selon l'invention, la dépose se fait sur une bande à plat favorisant donc une répartition homogène d'inclusions.

Selon une alternative possible, le rouleau est entraîné en rotation dans le sens correspondant au sens de défilement de la base du coeur ; la surface externe de la bande sur le rouleau devenant alors la surface en contact sur la base du coeur. Ce mode présente l'avantage de favoriser l'adhésion de la bande sur la base du fait que la surface externe de la bande sur le rouleau est en général plus chaude de quelques degrés par rapport à la surface en contact direct sur le rouleau. On peut donc avantageusement tirer parti de cette variation ou gradient de température dans la bande pour favoriser son collage.

Selon un mode préféré, on réalise l'application sur le rouleau de plusieurs bandes continues disposées entre elles de façon parallèle sur le rouleau. Pour cela, on dispose d'un réservoir contenant la masse fondue de confiserie à base de sucre cuit qui est disposé au dessus du rouleau. Le réservoir comprend un peigne de calibrage muni d'une série de plusieurs ouvertures permettant le calibrage d'une série de plusieurs bandes continues parallèles sur le rouleau pour le recouvrement d'une série de plusieurs bases du coeur qui défilent de manière continue et parallèle sur un moyen de convoyage disposé en dessous du rouleau de refroidissement. La série de plusieurs bases de coeur est obtenue par découpage en tronçons dans une plaque de plus grande largeur puis par écartement latéral des tronçons par un moyen d'écartement selon un écartement latéral déterminé supérieur à la largeur développée des bandes à déposer.

Selon un autre mode, la dépose de la couche de confiserie est obtenue de manière successive par mise en place d'au moins deux rouleaux disposés en série ; au moins un premier rouleau déposant une première épaisseur de bande sur la base du coeur, puis au moins un second rouleau déposant une seconde épaisseur de bande par superposition sur la première. Un tel agencement a pour avantage de pouvoir gérer une large plage de dimensions de la couche de confiserie à la fois en épaisseur et en largeur. En particulier, il est possible d'atteindre des épaisseurs d'enrobage importantes de l'ordre de 5 à 7 mm. Il est aussi possible de faire varier l'épaisseur dans certaines parties de la structure par dépose de largeurs de bandes différentes, par exemple. Il est aussi possible de faire des enrobages de matériaux de nature et/ou de caractéristiques différentes comme par exemple, la déposition d'une première couche en caramel (couche la plus interne) suivie de celle d'une seconde couche en nougat ou inversement.

Selon l'invention, la couche de confiserie en sucre cuit servant à la formation de l'enrobage est choisi parmi les préparations à base de caramel, de pâte à mâcher, de marshmallow et de nougat. La formulation comprend en général une émulsion formée de sucre, d'eau, de matière grasse et éventuellement de protéines et possède une température de cuisson varie environ entre 120 et 130°C.

Le coeur de la barre est de préférence une gaufrette ou un empilement de plusieurs couches de gaufrettes avec nappage intermédiaire de crème de fourrage tel qu'un praliné. Toutefois, le coeur peut être aussi constitué d'une base de biscuit, de glace ou encore de sucre cuit durci tel qu'un nougat ou encore l'une quelconque de ces combinaisons.

Enfin, les barres peuvent être enrobées totalement ou partiellement de chocolat après leur découpage en tronçons.

Les caractéristiques et avantages précitées ressortiront de la description détaillée et des dessins donnés à titre d'exemples non limitatifs et dans lesquels :
La figure 1 est une vue de côté du principe d'installation selon le procédé de l'invention ;
La figure 2 montre une vue de face de l'installation de la figure 1 avec coupe partielle selon A-A montrant le principe de dépose de calibrage et de dépose des bandes ;
La figure 3 est une vue de détail de la figure 2 avec coupe partielle selon A-A ;
La figure 4 est une vue de détail en coupe selon B-B au cours du pliage de la bande ;
La figure 5 est une vue de détail en coupe selon C-C après pliage de la bande ;
La figure 6 montre une vue en coupe d'une barre de confiserie finie ;
La figure 7 montre une vue de côté d'une installation pour la mise en oeuvre du procédé selon une variante possible de l'invention ;
La figure 8 montre en vue de dessus l'installation de la figure 7,
La figure 9 montre une vue de dessus d'une plaque de gaufre après découpage ;
La figure 10 montre en vue de côté la plaque de gaufre de la figure 9 ;
La figure 11 montre la ligne ou base formée par la succession des gaufrettes enrobées au moment du découpage en tronçons pour former les barres ;
La figure 12 montre un exemple de produit à enrober de forme hémi-cylindrique ;
La figure 13 montre le produit enrobé de la figure 12 ;
La figure 14 montre un exemple d'un produit à enrober de forme triangulaire ;
La figure 15 montre le produit enrobé de la figure 14.

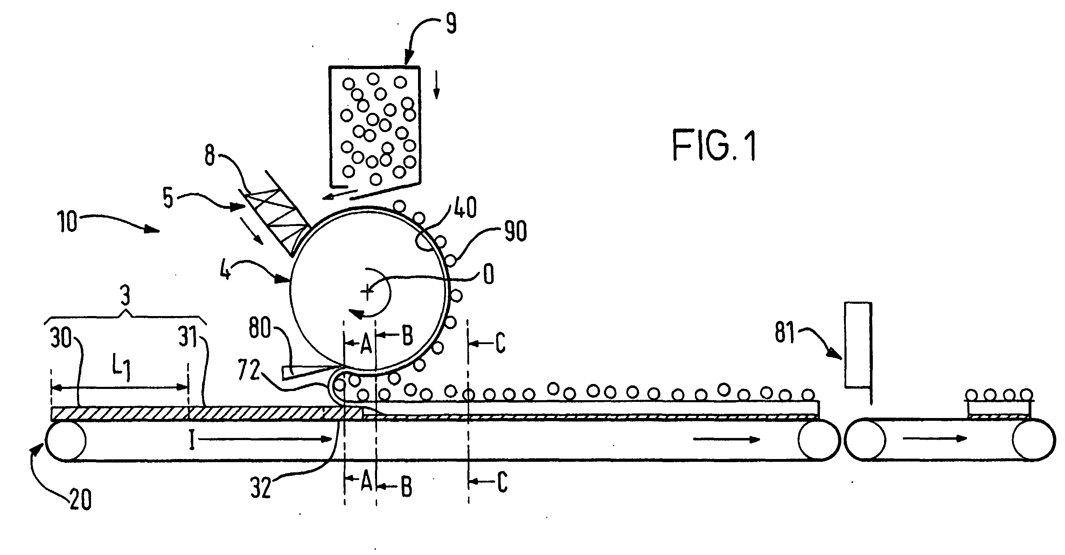

Une première forme d'installation d'enrobage 10 pour la mise en oeuvre du procédé est montrée à la figure 1. L'installation inclut un dispositif de transport 20, tel qu'une bande transporteuse, arrangé horizontalement pour le convoyage d'une série de gaufrettes 30, 31, 32 de longueur individuelle L₁. Les gaufrettes sont disposées bout-à-bout sur la bande transporteuse de façon à définir une base 3 continue à enrober destiné à former le coeur du produit final. La base 3 se déplace donc selon une direction de défilement horizontale I.

Au dessus du dispositif de transport est arrangé un dispositif d'enrobage qui comprend un rouleau de refroidissement 4 doté d'une surface cylindrique 40. La surface cylindrique est de préférence une surface lisse. Le rouleau est monté sur un axe de rotation O sensiblement transversal à la direction de défilement I de la base de gaufrettes. Un réservoir 5 pour recevoir une masse de confiserie fondue 8, telle que du caramel, est monté dans une partie supérieure du rouleau 4. Des moyens de chauffage sont préférablement associés au réservoir pour maintenir la masse dans un état liquide ou semi-liquide ; à une température constante de l'ordre de 85-95°C. Le réservoir est ouvert vers le bas de sorte que la masse de confiserie contenue dans le réservoir est apte à entrer au contact permanent du rouleau par gravité.

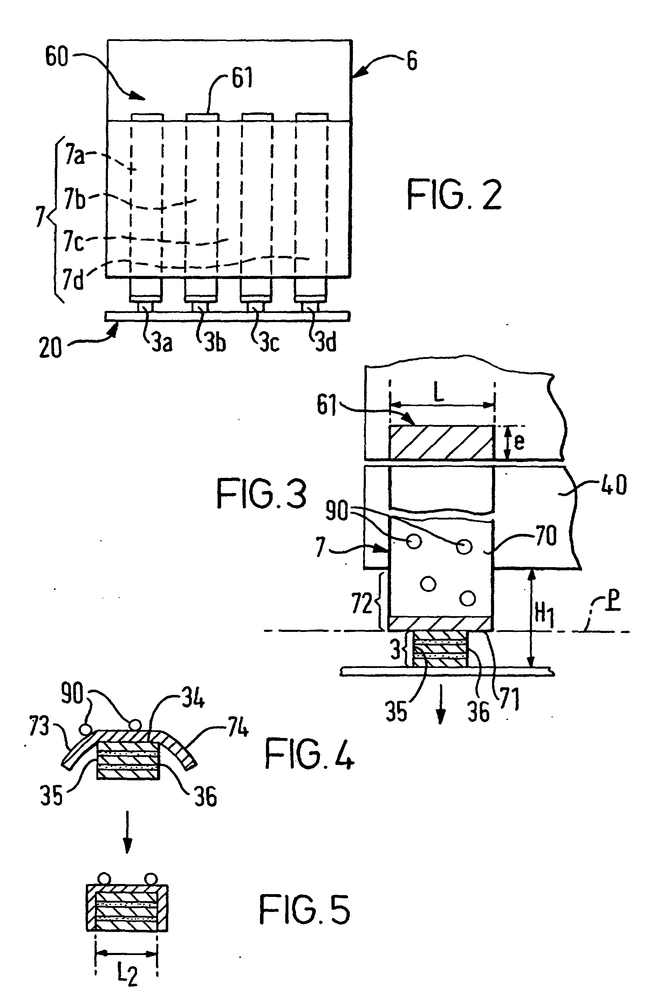

Comme le montre la figure 2, le réservoir possède un moyen de calibrage 60 formant un peigne pour le calibrage en parallèle d'une série 7 de bandes de confiserie 7a, 7b, 7c, 7d. Les bandes sont disposées à l'aplomb d'une série correspondante de plusieurs bases de coeur 3a, 3b, 3c, 3d qui défilent de manière continue sur le moyen de convoyage 20. Le moyen de calibrage 60 se compose d'une série d'ouvertures parallèles 61 ménagées dans la paroi du réservoir en nombre correspondant au nombre de bandes à déposer sur le rouleau de refroidissement. Chaque ouverture 61 est individuellement dimensionnée en largeur L et en épaisseur e pour former une bande individuelle dans les dimensions souhaitées. Un système micrométrique de réglage d'épaisseur et/ou de largeur individuellement contrôlable pour chaque ouverture peut être avantageusement installé afin de permettre d'affiner les dimensions de chacune des bandes, notamment, afin de faire face aux variations de températures dans le réservoir (système en lui-même non représenté).

Chaque bande 7 est déposée par effet de rotation du rouleau refroidisseur qui refroidit la couche la plus basse de la masse de confiserie 8 dans le réservoir de façon à ce qu'elle adhère par viscosité sur la surface du rouleau et à ce qu'elle soit calibrée au passage dans l'ouverture 61. Pendant son parcours angulaire sur le rouleau, la bande de confiserie refroidit peu à peu et sa viscosité augmente proportionnellement conduisant ainsi à la formation d'une bande ayant une certaine tenue jusqu'à ce qu'elle atteigne un point bas du rouleau où elle est alors décollée au moyen d'un racleur 80 disposé tangentiellement au rouleau. La température du rouleau ainsi que la vitesse de rotation du rouleau sont des paramètres réglés en fonction des propriétés spécifiques de la masse à refroidir et de l'état viscoplastique dans lequel la masse est désirée afin d'obtenir son aptitude à plier au moment de l'application sur la base à enrober. La disposition angulaire du réservoir est aussi fonction de ces propriétés finales désirées. En général, le réservoir est disposé de façon à ce que la bande défile selon une plage angulaire comprise entre 180 et 270 degrés, de préférence entre 190 et 220 degrés (limites comprises).

Dans certains cas, la bande est apte à se décoller d'elle-même, par effet de traction de la portion enrobée, sans qu'il soit nécessaire de disposer d'un racleur. Toutefois, un excès de traction n'est pas désirable et peut résulter en un allongement indésirable de la bande de sorte qu'il sera préférable que la vitesse de rotation du rouleau soit sensiblement identique à la vitesse de défilement de la base 3 sur le moyen de convoyage.

Dans le cas figuré, une dépose de céréales, telles que du riz soufflé ou autres, est prévue à partir d'une trémie 9 disposée sensiblement à la verticale du centre du rouleau et en sortie de calibrage. Ainsi, un dosage de céréales est réalisé par gravité sur la bande de masse de confiserie à un stade où la bande conserve une aptitude importante au collage de particules de faible masse. Le collage des céréales est assuré tout au long du parcours par augmentation progressif de la viscosité de la bande. Comme le montre la figure 3, la bande, ayant atteint un niveau viscoplastique satisfaisant lié à son parcours sur le rouleau, est déposée sur le dessus de la gaufrette 3 selon un plan de dépose P horizontal correspondant, dans le cas illustré représentant une gaufrette de section sensiblement rectangulaire, à la surface supérieure 34 de la gaufrette.

Il est à noter que la bande entre la ligne de décollement sur le rouleau et la ligne de dépose sur la gaufrette forme une boucle 72, ouverte dans la direction d'avance I, de sorte que la surface externe 70 de la bande portant les inclusions de céréales ou autres 90 constitue la face externe de l'enrobage sur la gaufrette et la surface de contact 71 sur le rouleau constitue la face interne de collage sur la gaufrette. La hauteur H₁ entre la ligne de décollement et la bande transporteuse peut être optimisée de façon à ce que la bande atteigne l'état viscoplastique pour l'effet de repliement escompté au moment de la dépose sur la gaufrette. Pour cela, des essais ont montré qu'une hauteur de l'ordre de 4 à 15 cm, de préférence 5-8 cm est optimum.

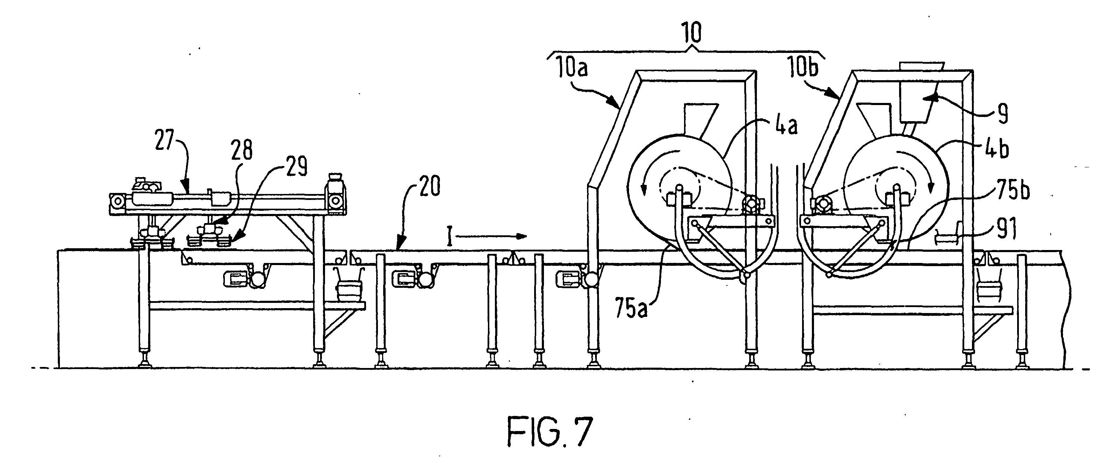

De préférence, la bande dépasse de chaque côté de la barre au moment de la dépose et la largeur L de la bande correspond sensiblement au développé de la surface supérieure 34, et des surfaces latérales 35, 36 de la gaufrette afin que la bande puisse recouvrir entièrement et de manière précise les parties visibles de la gaufrette. La figure 4 montre l'étape intermédiaire au cours de laquelle les parties libres 73, 74 de la bande fléchissent par effet de leur propre poids puis, la figure 5 montre le recouvrement de la bande avec repli total et collage des parties libres 73, 74 sur la gaufrette. On entend par "parties libres", les portions de bande qui sont espacées des surfaces de gaufrette à recouvrir au moment de la mise en contact de la bande avec la gaufrette. En l'occurrence, dans l'exemple d'une gaufrette à section rectangulaire, les parties libres constituent les faces latérales de l'enrobage destinées à recouvrir les côtés de la gaufrette. Selon un aspect important de l'invention, au moment de la dépose selon le plan défini P, la bande doit se trouver dans un état non solidifié, souple et plastique permettant de développer une aptitude au pliage à partir du plan P selon un angle de déformation supérieur à 20 degrés, de préférence de 45 à 90 degrés. On peut qualifier ainsi la déformation de la bande par la mesure de l'angle formé par les parties libres de la bande lorsqu'elles plient et ce à partir d'une référence horizontale correspondant au plan de dépose. Dans le cas ou la bande a une aptitude au pliage inférieure à 20 degrés, du fait d'une trop grande rigidité par effet de durcissement avancé ou par effet d'épaisseur, il est alors difficile d'envisager un recouvrement d'une surface de confiserie selon l'invention. Il est aussi important que la bande soit telle qu'elle puisse se plier sans subir de fluage ou d'extension pouvant modifier de manière difficilement contrôlable ses dimensions initiales. Un léger fluage peut toutefois être admis dans la mesure ou il n'apparaîtrait pas visuellement comme un défaut sur le produit enrobé. Il est aussi important de noter qu'en surface, la bande doit conserver une aptitude au collage avec les surfaces à recouvrir. La surface de contact doit donc conserver de préférence un aspect relativement pateux et non entièrement solidifiée tout en ayant une certaine tenue pour pouvoir être séparé du rouleau par un moyen de raclage.

Comme le montre la figure 1, la solidification de la bande continue en masse de confiserie une fois pliée et collée sur la base se poursuit le long du convoyeur jusqu'au moment où intervient le découpage en tronçons de barres individuelles par un moyen de découpage 81 approprié tel qu'un système de découpage mécanique ou par ultrason. L'étape ultérieure est l'enrobage des barres par une couche de chocolat par tout moyen tel que par trempage dans une masse de chocolat fondu ou pulvérisation d'une masse de chocolat fondu (étape non représentée).

La figure 6 montre le produit de confiserie final prêt à l'emballage après enrobage d'une couche externe de chocolat. Le coeur du produit proprement dit comprend une succession de couches de gaufre 37 et de couches 38 de crème de fourrage. L'enrobage de sucre cuit 7 recouvre les faces supérieures et latérales du coeur et comprend des inclusions 90. Enfin une couche externe de chocolat 91 constitue l'enrobage final.

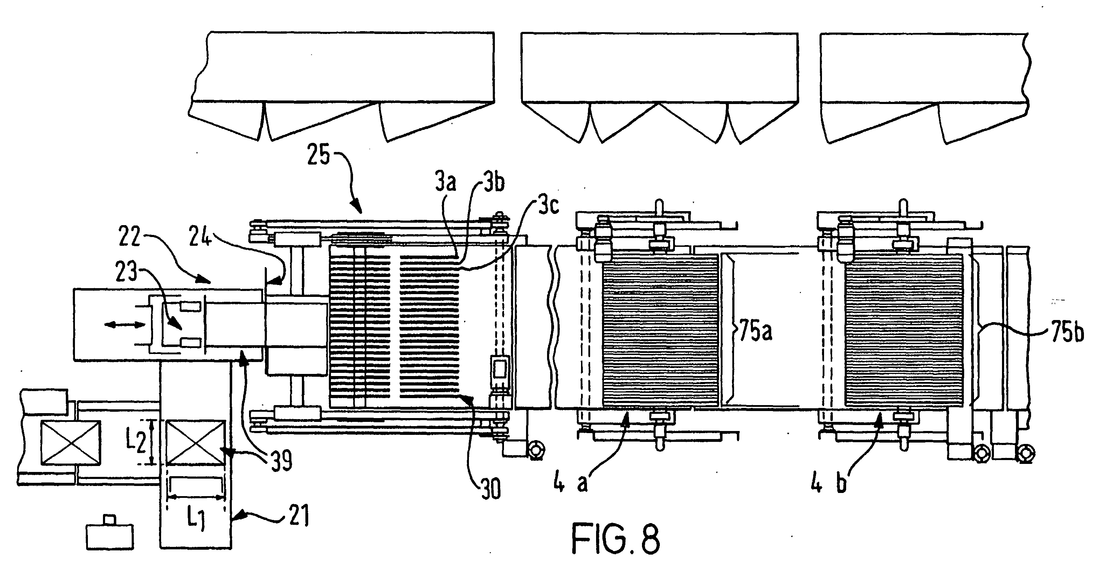

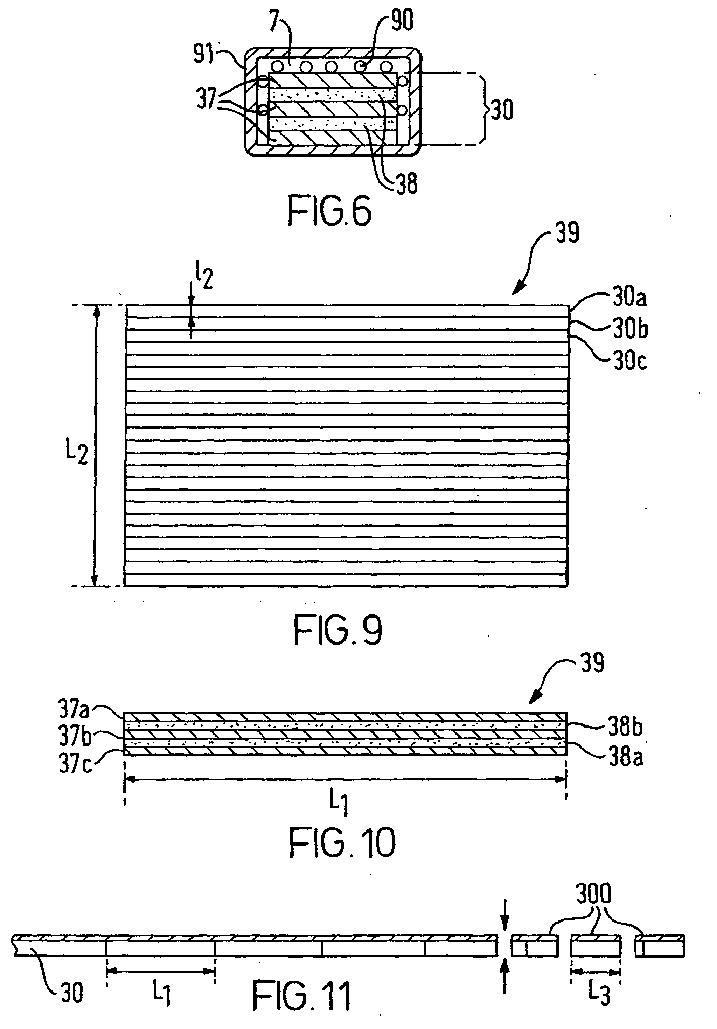

Les figure 7 et 8 montrent la disposition d'une installation selon une variante. Les gaufrettes sont obtenues à partir de plaques 39 de gaufres telles qu'illustrées aux figures 9 et 10. Ces plaques sont d'une longueur L₁ et d'une largeur L₂ prévues pour permettre la découpe en largeur d'une pluralité de gaufrettes individuelles 3a, 3b, 3c, etc. La largeur L₂ est un multiple de la largeur l₂ de chacune des gaufrettes individuelles de sorte qu'on puisse découper un nombre déterminé de gaufrettes dans ladite plaque, par exemple 23 gaufrettes individuelles de la largeur l₂ et longueur L₁ dans le cas présent. Chaque plaque de gaufre comprend avantageusement une structure en sandwich comprenant une superposition de couches de gaufre 37a, 37b, 37c avec une couche de crème de fourrage 38a, 38b disposée entre chaque couche de gaufre. La couche de fourrage peut avantageusement être une crème pralinée ou autres.

Les plaques de gaufres 39 sont obtenues par tartinage d'une couche de gaufre avec de la crème de fourrage, empilage d'une nouvelle couche de gaufre, puis pressage des couches de gaufre ensemble et ainsi de suite jusqu'à obtention du nombre de couches de gaufre souhaité.

Chaque plaque entière de gaufre 39 est transportée sur une bande de convoyage 21 jusqu'à un poste de découpage 22. La plaque est installée entre un moyen de poussée 23 et un moyen de découpage 24. Le moyen de poussée est animé d'un mouvement longitudinal de va-et-vient qui fait passer la plaque 39 au travers du moyen de découpage qui est formé d'une grille de découpe munie d'une série de lames ou fils de découpe verticalement orientés. Les gaufrettes 30 telles que découpées dans la plaque sont ensuite séparées individuellement sur une tôle de glissement selon un écartement latéral déterminé par un moyen d'écartement comme dans un poste d'écartement à aiguilles 25. Le poste se présente sous la forme d'un dispositif de transport 27 surplombant la plaque de gaufre découpée et qui comprend un chariot d'écartement 28 déplaceable le long du dispositif de transport et muni d'aiguilles 29 qui séparent les gaufrettes. Les aiguilles montées sur support sont animées d'un mouvement de va-et-vient vertical pour l'engagement des aiguilles sur chaque plaque dans le poste d'écartement. Bien entendu, l'écartement des gaufrettes est déterminé en fonction de la position des bandes sur le rouleau, de leur largeur et de leur espacement relatif. Un écartement latéral entre chaque gaufrette de l'ordre de 1 à 5 cm est préférable de façon à disposer d'une capacité de traitement importante tout en limitant les dimensions des installations.

Les gaufrettes 30 ainsi positionnées en écartement latéral sont transportées sur un moyen de convoyage 20 en direction de la ligne d'enrobage 10 proprement-dite. Pour cela, des lignes continues de gaufrettes disposées de manière jointive dans la direction de défilement sont réalisées, comme précédemment expliqué dans la l'exemple de la figure 1. La ligne d'enrobage comprend deux postes d'enrobage 10a, 10b séparés longitudinalement sur la ligne formant une série de deux rouleaux 4a, 4b montés en série. Un premier rouleau 4a est entraîné en rotation dans le sens de défilement I du moyen de convoyage pour permettre la dépose sur les gaufrettes d'une série 75a de bandes parallèles de sucre cuit avec pour caractéristique que la surface externe des bandes sur le rouleau devient la surface de collage sur les gaufrettes. Cette surface étant légèrement plus chaude par rapport à la surface en contact sur le rouleau, on favorise ainsi le collage de ces premières bandes avec les gaufrettes.

Le second poste d'enrobage 10b est monté en sens inverse avec un rouleau 4b entraîné en rotation dans le sens opposé au sens de défilement. On peut ainsi disposer sur la partie haute du rouleau un moyen 9 destiné à la dépose d'inclusions solides telles que des céréales, des noix et autres fruits secs, ou encore des bonbons ou des pépites de chocolat ou autres. Ce moyen est généralement une trémie à ouverture réglable dirigée sur le rouleau et associée à un vibreur. Un système de récupération 91 est disposé horizontalement à l'aplomb de la tangente verticale à la surface du rouleau pour récupérer les parties qui peuvent se décoller des bandes.

La disposition de deux postes d'enrobage en série selon l'invention autorise un large choix en épaisseur d'enrobage pouvant aller de 1 mm lorsqu'un seul poste est en fonctionnement à un maximum de 7-8 mm lorsque les deux postes sont en action. Au dessus de 3,5 à 4 mm par bande, on constate une rigidité accrue conduisant à une aptitude au pliage insuffisante pour obtenir un enrobage et un collage correct des bandes. L'épaisseur maximale par bande peut toutefois varier selon la nature des matériaux d'enrobage et selon les conditions de températures et de réglage du dispositif.

L'opération qui suit l'enrobage des gaufrettes consiste à découper des tronçons 300 de longueur voulue par un moyen de découpage tel que le montre la figure 11. La longueur L₃ des tronçons peut être indépendante de, et est généralement inférieure à, la longueur L₁ des tronçons jointifs 30 des gaufrettes juste après l'enrobage. L'enrobage en sucre cuit a pour avantage de solidariser les tronçons 30 entre eux de façon à former une base enrobée continue facilement découpable à tout endroit désiré possible.

Il est entendu que l'enrobage de la barre peut être complété par la dépose d'une couche inférieure de sucre cuit en contact avec la surface inférieure du coeur (non représenté). Pour cela, on peut prévoir de déposer par un rouleau supplémentaire une couche calibrée plane de sucre cuit sur la bande transporteuse. La bande est ainsi calibrée de manière désirée en épaisseur et en largeur. On applique ensuite la gaufre de manière tangentielle sur la couche plane de sucre non encore entièrement durcie de façon à obtenir l'adhésion de la gaufre sur la couche inférieure. Les opérations d'enrobage des autres faces se déroulent comme il a été décrit dans les exemples précédents.

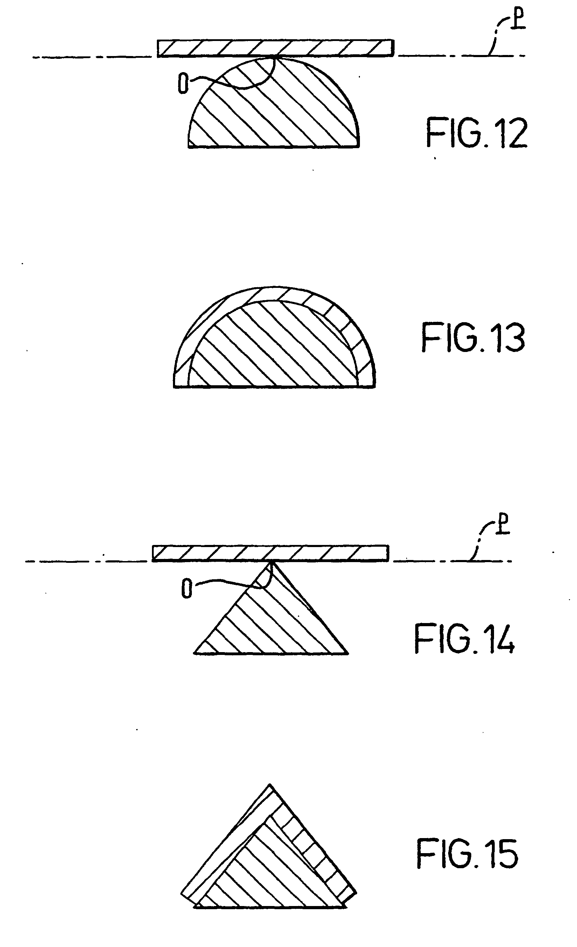

Les figures 12 à 15 illustrent différentes variantes de formes possibles des barres enrobées selon l'invention. Les figures 12 et 13 montrent la disposition d'une bande de confiserie par pliage viscoplastique sur un coeur de section transversale hémisphérique. Dans ce cas, la bande est appliquée selon un plan de dépose P adjacent à la ligne la plus élevée ou tangente à la courbe O de la base du coeur. Les figures 14 et 15 montrent la disposition d'une bande sur un coeur de section transversale triangulaire.

Bien entendu, d'autres formes de la base en trois dimensions sont possibles comme une forme carrée ou trapézoïdale, par exemple. Dans tous les cas, l'objet à enrober possède une surface à enrober en trois dimensions et la dépose se fait selon la ligne ou la surface la plus élevée de la base avant que les parties libres ne se replient d'elles-mêmes sur les bords de la base en tirant avantage de l'aptitude au pliage du matériau de sucre cuit.

On constate qu'en procédant selon la méthode décrite, que l'on obtient une étonnante régularité de l'épaisseur d'enrobage sur toutes les faces couvertes ; régularité qu'il n'était pas possible d'obtenir jusqu'alors dans les plages d'épaisseurs concernées et par les procédés traditionnels. Une telle régularité participe à une meilleure qualité générale du produit, une consistance et une texture plus homogène. On constate une distribution mieux répartie des inclusions solides noyées dans la confiserie. On constate aussi une réduction significative du taux de masse à recycler.

Différents exemples de masse de sucre cuit susceptibles de convenir pour l'enrobage sont donnés dans les exemples suivants.

### Exemple 1 :

On réalise une masse de confiserie du type pâte à mâcher à la menthe de la façon suivante. On réalise 12 Kg de frappé à partir de 50% en poids d'albumine d'oeuf et 50% en poids d'eau. On ajoute au frappé une masse sucrée portée à température de cuisson de 126°C et constituée de 100 Kg de sirop de glucose, 100 Kg de sucre et 12 Kg de matière grasse. On mélange le frappé avec la masse sucrée à température de cuisson et l'on mélange. On remplit le réservoir et on le maintient à température de l'ordre de 90°C pour passage au cylindre.

### Exemple 2 :

On réalise une masse de caramel de la façon suivante. 5 Kg de gélatine 140 bloom est obtenu par trempage de 50% en poids de gélatine dans 50% en poids d'eau. On ajoute une masse de sucre portée à 129°C et composée de 100 Kg de sirop de glucose, 60 Kg de sucre et 15 Kg de matière grasse. On mélange la gélatine 140 bloom avec la masse de sucre. On remplit le réservoir et le maintient à température de l'ordre de 90°C pour passage au cylindre.

### Exemple 3 :

Les ingrédients pour une masse de marshmallow et une masse de nougat sont les suivants :

| | Ingrédients | Marshmallow (Kg) | Nougat (Kg) |
|---|---|---|---|
| Partie 1 | Sucre | 20 | 16 |
| | Eau | 7 | 5 |
| | Glucose | 26 | 14,5 |
| Partie 2 | Protéine de lait ou Albumine | 0,150 | 0,120 |
| | Eau | 0,225 | 0,180 |
| | Sirop glucose | 0,625 | 0,450 |
| Partie 3 | Lait écrémé | -- | 3 |
| | Sucre glace | -- | 0,75 |
| | Matière grasse | 3 | 2 |

### Exemple 4 :

La masse de marshmallow est obtenue par cuisson à 123°C de la partie 1 pour obtenir un sirop. La partie 1 est additionnée à la partie 2 puis est montée en neige dans un batteur planétaire à vitesse rapide. La partie 3 est additionnée en vitesse lente puis transférée dans le réservoir.

### Exemple 5 :

La masse de nougat est obtenue par cuisson de la partie 1 à 120°C jusqu'à obtention d'un sirop qui est ensuite additionnée dans la partie 2. On monte en neige la partie 1 et 2 dans un batteur planétaire à vitesse rapide. Puis, on additionne la partie 3 en vitesse lente et l'on transfère dans le réservoir.

### Exemple 6:

Un caramel du type de l'exemple 2 est soumis à un essai de mesure de viscosité à la température de 35 °C correspondant à la température moyenne de dépose sur la gaufrette. Les résultats sont les suivants:

| Taux de cisaillement (seconde⁻¹) | Viscosité (Poise) |
|---|---|
| 2 | 7562 |
| 4 | 6121 |
| 6 | 5291 |
| 8 | 4625 |

## Revendications

1. Méthode pour la fabrication de barres individuelles de confiserie comprenant un coeur en trois dimensions et au moins une couche en matériau de confiserie à base de sucre cuit recouvrant en partie au moins ledit coeur, **caractérisée en ce que** :
(i) au moins une bande continue (7) en matériau de confiserie à base de sucre cuit est calibrée à chaud sur un rouleau de refroidissement (4) ;
(ii) après refroidissement suffisant, la bande (7) est décollée du rouleau (4) et la bande est déposée sur une base (3), destinée à former le coeur des barres et défilant de manière continue ; la dépose s'effectuant par mise en contact de la bande (7) sensiblement selon un plan (P) adjacent à la surface ou ligne de contact la plus élevée de ladite base ; la bande (7) étant amenée au moment de la dépose dans un état viscoplastique tel que la bande se déforme sous son propre poids de façon à recouvrir en partie au moins les faces (35, 36) de ladite base en dessous de ladite surface ou ligne de contact,
(iii) des tronçons de longueur voulue sont ensuite découpés.

2. Méthode selon la revendication **caractérisée en ce que** la déformation de la bande (7) se fait par pliage des parties libres (73, 74) sur la base du coeur et sans modification significative des dimensions initiales de la bande telles que définies lors de l'application la bande sur ledit rouleau.

3. Méthode selon la revendication 2, **caractérisée en ce que** le calibrage de la bande (7) en matériau de confiserie se fait par déposition à chaud du matériau sur le rouleau à une température initiale (t₁) efficace pour permettre le calibrage en largeur et épaisseur au travers d'une ouverture (61) aux dimensions (L, e) correspondantes à celles de la bande à déposer.

4. Méthode selon la revendication 3, **caractérisée en ce que** la bande (7), une fois calibrée, est refroidie au contact du rouleau (4) jusqu'à son décollement selon une différence de températures entre la température initiale (t₁) et la température de dépose (t₂) comprise entre 50 et 60°C, de préférence entre 52 et 57°C.

5. Méthode selon la revendication 4, **caractérisé en ce que** la température initiale (t₁) est comprise entre 75 et 95°C, de préférence entre 85 et 92°C, alors que la température de dépose (t2) est comprise entre 25 et 40°C, de préférence entre 32 et 37°C.

6. Méthode selon la revendication 3 à 5, **caractérisée en ce que** le contrôle des températures de la bande entre l'application de celle-ci sur le rouleau et sa dépose sur la base à recouvrir est obtenue par régulation du rouleau (4) à une température de refroidissement constante et une vitesse de rotation déterminée.

7. Méthode selon la revendication 6, **caractérisée en ce que** la base continue (3) du coeur est formée d'une pluralité de tronçons jointifs (30, 31, 32) alimentés par un moyen de convoyage (20) animé d'une vitesse sensiblement égale à la vitesse de rotation du rouleau.

8. Méthode selon l'une quelconque des revendications précédentes, **caractérisée en ce qu'**après l'application de la bande (7) sur le rouleau (4) et avant durcissement dans son état plastique, on procède à la déposition de pièces d'inclusions (90) telles que céréales, noix ou fruits secs de façon à obtenir l'adhérence des pièces par simple contact avec le matériau de la bande non encore entièrement durci.

9. Méthode selon l'une quelconque des revendications précédentes, **caractérisée en ce que** l'application sur le rouleau (4) est effectuée au moyen d'un réservoir (6) comprenant une série de plusieurs ouvertures (61) de façon à réaliser une série de plusieurs bandes continues parallèles (7a, 7b, 7c, 7d) sur le rouleau qui alimentent elle-même une série correspondante de plusieurs bases de coeur (3a, 3b, 3c, 3d) défilant de manière continue et parallèle sur un moyen de convoyage (20).

10. Méthode selon la revendication 9, **caractérisé en ce que** la série de plusieurs bases de cour (3a, 3b, 3c, 3d) est obtenue par découpage de tronçons (30a, 30b, 30c) dans une plaque (39) de plus grande largeur puis par écartement latéral des tronçons par un moyen d'écartement (25) selon un écartement déterminé en fonction de l'écartement correspondant des bandes parallèles sur le rouleau.

11. Méthode selon l'une quelconque des revendications précédentes, **caractérisée en ce que** la dépose de la couche de confiserie (7) sur la base du coeur est obtenue de manière successive par une série d'au moins deux rouleaux (4a, 4b) disposés en série ; au moins un premier rouleau (4a) déposant une première épaisseur de bande sur la base puis au moins un second rouleau (4b) déposant une seconde épaisseur de bande sur ladite base.

12. Méthode selon l'une quelconque des revendications précédentes, **caractérisée en ce que** la base à recouvrir (3) comprend une forme en trois dimensions choisie parmi une forme de section carrée, rectangulaire, triangulaire, trapézoidale ou hémi-sphérique.

13. Méthode selon l'une quelconque des revendications précédentes, **caractérisée en ce que** la couche de confiserie (7) en sucre cuit est choisie parmi les préparations à base de caramel, de pâte à mâcher, de marshmallow et de nougat.

14. Méthode selon l'une quelconque des revendications précédentes, **caractérisée en ce que** le coeur (30) comprend une base de gaufrettes, de biscuit, de glace ou de sucre cuit durci.

15. Méthode selon l'une quelconque des revendications précédentes, **caractérisée en ce qu'**on procède à un enrobage de chocolat (91) après découpage des barres en tronçons (300).

## Patentansprüche

1. Verfahren zur Herstellung von Konfekt-Einzelriegeln, umfassend einen dreidimensionalen Kern und mindestens eine Schicht aus Konfektmaterial auf Bonbonbasis, die diesen Kern mindestens zum Teil bedeckt, **dadurch gekennzeichnet, daß**
(i) mindestens ein kontinuierliches Band (7) aus Konfektmaterial auf Bonbonbasis unter Wärme auf einer Kühlwalze (4) kalibriert wird,
(ii) das Band (7) nach ausreichendem Kühlen von der Walze (4) abgelöst wird, auf einer Basis (3) abgelegt wird, die dazu bestimmt ist, den Kern der Riegel zu bilden, und kontinuierlich vorbewegt wird, wobei die Ablage stattfindet, indem das Band (7) im wesentlichen in einer Ebene (P) in Kontakt gebracht wird, die an die höchste Kontaktfläche oder -linie der Basis angrenzt, und wobei das Band (7) zum Zeitpunkt der Ablage in einem solchen viskos-plastischen Zustand zugeführt wird, daß es sich unter seinem eigenen Gewicht so verformt, daß es mindestens zum Teil die Seiten (35, 36) der Basis unterhalb dieser Kontaktfläche oder -linie bedeckt,
(iii) anschließend Abschnitte von gewünschter Länge abgeschnitten werden.

2. Verfahren nach Anspruch 1, **dadurch gekennzeichnet, daß** die Verformung des Bandes (7) durch Umbiegen der freien Teile (73, 74) auf der Basis des Kerns und ohne signifikante Änderung der Anfangsabmessungen des Bandes, wie sie bei Aufbringen des Bandes auf der Walze definiert werden, vor sich geht.

3. Verfahren nach Anspruch 2, **dadurch gekennzeichnet, daß** die Kalibrierung des Bandes (7) aus Konfektmaterial durch Auflegen des Materials auf die Walze unter Wärme bei einer Anfangstemperatur (t₁) stattfindet, die die Breiten- und Dickenkalibrierung in einer Öffnung (61) mit den Abmessungen (L, e), die denen des aufzulegenden Bandes entsprechen, gestattet.

4. Verfahren nach Anspruch 3, **dadurch gekennzeichnet, daß** das Band (7) nach Kalibrierung im Kontakt mit der Walze (4) bis zu seiner Ablösung unter einem Temperaturunterschied zwischen der Anfangstemperatur (t₁) und der Ablagetemperatur (t₂) gekühlt wird, der zwischen 50 und 60°C, vorzugsweise zwischen 52 und 57°C, beträgt.

5. Verfahren nach Anspruch 4, **dadurch gekennzeichnet, daß** die Anfangstemperatur (t₁) zwischen 75°C und 95°C, vorzugsweise zwischen 85°C und 92°C beträgt, während die Ablagetemperatur (t₂) zwischen 25 und 40°C, vorzugsweise zwischen 32 und 37°C, beträgt.

6. Verfahren nach Anspruch 3 bis 5, **dadurch gekennzeichnet, daß** die Steuerung der Temperaturen des Bandes zwischen seinem Aufbringen auf die Walze und seiner Ablage auf der zu bedekkenden Basis durch Einregulierung der Walze (4) auf eine konstante Kühltemperatur und eine bestimmte Drehgeschwindigkeit erhalten wird.

7. Verfahren nach Anspruch 6, **dadurch gekennzeichnet, daß** die kontinuierliche Basis (3) des Kerns von einer Vielzahl von aneinanderstoßenden Abschnitten (30, 31, 32) gebildet wird, die durch eine Fördereinrichtung (20) zugeführt werden, die in eine Geschwindigkeit versetzt wird, die im wesentlichen gleich der Drehgeschwindigkeit der Walze ist.

8. Verfahren nach einem der vorhergehenden Ansprüche, **dadurch gekennzeichnet, daß** man nach dem Aufbringen des Bandes (7) auf die Walze (4) und vor dem Härten in seinem plastischen Zustand Einschlußstücke (90), wie z.B. Cerealien, Nüsse oder Trockenobst, auflegt, so daß die Haftung der Stücke durch einfachen Kontakt mit dem noch nicht ganz ausgehärteten Material des Bandes erreicht wird.

9. Verfahren nach einem der vorhergehenden Ansprüche, **dadurch gekennzeichnet, daß** das Aufbringen auf die Walze (4) mit Hilfe eines Behälters (6) vorgenommen wird, der eine Reihe von mehreren Öffnungen (61) besitzt, so daß auf der Walze eine Reihe von mehreren parallelen kontinuierlichen Bändern (7a, 7b, 7c, 7d) gebildet wird, die ihrerseits eine entsprechende Reihe von mehreren Kernbasen (3a, 3b, 3c, 3d) versorgen, die sich kontinuierlich und parallel auf einer Fördereinrichtung (20) vorbewegen.

10. Verfahren nach Anspruch 9, **dadurch gekennzeichnet, daß** die Reihe von mehreren Kernbasen (3a, 3b, 3c, 3d) erhalten wird, indem Abschnitte (30a, 30b, 30c) in einer Platte (39) von größerer Breite ausgeschnitten werden und dann die Abschnitte durch eine Entfernungseinrichtung (25) seitlich voneinander entfernt werden, wobei der Abstand in Abhängigkeit von dem entsprechenden Abstand der parallelen Bänder auf der Walze bestimmt wird.

11. Verfahren nach einem der vorhergehenden Ansprüche, **dadurch gekennzeichnet, daß** die Ablage der Konfektschicht (7) auf der Kernbasis aufeinanderfolgend durch eine Reihe von mindestens zwei in Reihe angeordneten Walzen (4a, 4b) erhalten wird, wobei mindestens eine erste Walze (4a) eine erste Banddicke auf der Basis ablegt und dann mindestens eine zweite Walze (4b) auf dieser Basis eine zweite Banddicke ablegt.

12. Verfahren nach einem der vorhergehenden Ansprüche, **dadurch gekennzeichnet, daß** die zu bedeckende Basis (3) eine dreidimensionale Form besitzt die aus einer Form mit quadratischen, rechteckigem, dreieckigem, trapezförmigen Querschnitt oder einer Halbkugelform ausgewählt ist.

13. Verfahren nach einem der vorhergehenden Ansprüche, **dadurch gekennzeichnet, daß** die Konfektschicht (7) aus Bonbonmasse aus den Zubereitungen auf der Grundlage von Karamel, Kaumasse, Marshmallow und Nougat ausgewählt ist.

14. Verfahren nach einem der vorhergehenden Ansprüche, **dadurch gekennzeichnet, daß** der Kern (30) eine Basis aus Waffel, Keks, Eis oder gehärteter Bonbonmasse umfaßt.

15. Verfahren nach einem der vorhergehenden Ansprüche, **dadurch gekennzeichnet, daß** man nach dem Zuschneiden der Riegel zu Abschnitten (300) eine Umhüllung mit Schokolade (91) vornimmt.

## Claims

1. Method for producing individual confectionery bars comprising a three-dimensional core and at least one layer of confectionery material based on cooked sugar at least partly covering the said core, **characterized in that** :
(i) at least one continuous strip (7) of confectionery material based on cooked sugar is metered while hot onto a cooling roller (4);
(ii) after sufficient cooling, the strip (7) is detached from the roller (4) and the strip is deposited onto a base (3), designed to form the core of the bars and which is moving in a continuous manner; deposition being carried out by putting the strip (7) into contact substantially along a plane P adjacent to the highest contact surface or line of the said base; the strip (7) being brought at the moment of deposition into a viscoplastic state such that the strip deforms under its own state so as to cover at least partly the faces (35,36) of the said base below the said contact surface or line,
(iii) sections are then cut having the desired length.

2. Method according to claim 1, **characterized in that** the strip (7) is deformed by folding the free parts (73,74) onto the base of the core and without significant modification of the initial dimensions of the strip as defined when the strip is applied to the said roller.

3. Method according to claim 2, **characterized in that** the strip (7) of confectionery material is metered by depositing the material while hot onto the roller at an effective initial temperature (t₁) so as to allow metering in width and thickness through an opening (62) with dimensions (L,e) corresponding to those of the strip to be deposited.

4. Method according to claim 3 **characterized in that** the strip (7), once metered, is cooled in contact with the roller (4) until it is detached with a temperature difference between the initial temperature (t₁) and the deposition temperature (t₂) of between 50 and 60°C, preferably between 52 and 57°C.

5. Method according to claim 4, **characterized in that** the initial temperature (t₁) lies between 75 and 95°C, preferably between 85 and 92°C, while the deposition temperature (t₂) lies between 25 and 40°C, preferably between 32 and 37°C.

6. Method according to claims 3 to 5, **characterized in that** control of the temperatures of the strip between its application onto the roller and its deposition onto the base to be covered is obtained by regulating the roller (4) to a constant cooling temperature and a set rotational speed.

7. Method according to claim 6, **characterized in that** the continuous base (3) of the core is formed of a plurality of abutting sections (30, 31, 32) fed by a conveying means (2) driven at a speed substantially equal to the speed of rotation of the roller.

8. Method according to any one of the preceding claims, **characterized in that** after application of the strip (7) onto the roller (4) and before hardening in its plastic state, pieces of inclusions (90) such as cereals, nuts or dried fruit are deposited so as to obtain adhesion of the pieces by simple contact with the material of the strip that is not yet entirely hardened.

9. Method according to any one of the preceding claims, **characterized in that** application onto the roller (4) is carried out by means of a reservoir (6) comprising a series of several openings (61) so as to produce a series of several parallel continuous strips (7a, 7b, 7c, 7d) on the roller which themselves feed a corresponding series of several core bases (3a, 3b, 3c, 3d) moving in a continuous and parallel manner on the conveying means (20).

10. Method according to claim 9,**characterized in that** the series of several core bases (3a, 3b, 3c, 3d) is obtained by cutting up the sections (30a, 30b, 30c) into a sheet (39) with a greater width and then by lateral separation of the sections by a separating means (25) according to a separation determined as a function of the corresponding separation of the parallel strips on the roller.

11. Method according to any one of the preceding claims, **characterized in that** the confectionery layer (7) is deposited onto the core base in a successive manner by means of a series of at least two rollers (4a, 4b) disposed in series; at least one first roller (4a) depositing a first thickness of strip onto the base and then at least one second roller (4b) depositing a second thickness of strip onto the said base.

12. Method according to any one of the preceding claims **characterized in that** the base to be covered (3) comprises a three-dimensional shape chosen from a shape with a square, rectangular, triangular, trapezoidal or hemispherical shape.

13. Method according to any one of the preceding claims, **characterized in that** the layer of confectionery (7) made of cooked sugar is chosen from preparations based on caramel, chewy candy, marshmallow and nougat.

14. Method according to any one of the preceding claims, **characterized in that** the core (30) comprises a base of wafers, biscuit, ice cream or hardened cooked sugar.

15. Method according to any one of the preceding claims, **characterized in that** enrobing with chocolate (91) is carried out after the bars are cut into sections (300).
